# EUROPÄISCHE PATENTSCHRIFT

(11) **EP 3 933 207 B1**
(45) Veröffentlichungstag und Bekanntmachung des Hinweises auf die Patenterteilung: **26.11.2025**
(21) Anmeldenummer: 20182847.2
(22) Anmeldetag: 29.06.2020
(51) Int. Cl.: F04D 25/06, F04D 25/08, F04D 29/42, F04D 29/58, F04D 29/66, A61C 17/12, A61C 17/02

(54) **MEDIZINISCHES, INSBESONDERE DENTALMEDIZINISCHES, GEBLÄSE MIT SCHALLISOLIERENDEM DÄMMSYSTEM**
MEDICAL FAN WITH AN ACOUSTIC INSULATION SYSTEM, IN PARTICULAR FOR DENTAL PURPOSES
VENTILATEUR MÉDICAL AVEC SYSTÈME D'ISOLATION ACOUSTIQUE, EN PARTICULIER POUR USAGE DENTAIRE

(43) Veröffentlichungstag der Anmeldung: 05.01.2022
(73) Patentinhaber: Dürr Dental SE, 74321 Bietigheim-Bissingen (DE)
(72) Erfinder: Hägele, Andreas, 71384 Weinstadt (DE); Thomas, Wohlbold, 74251 Lehrensteinsfeld (DE)
(74) Vertreter: Frenkel, Matthias Alexander

(56) Entgegenhaltungen:
- EP-B1- 2 686 559
- CN-A- 106 961 185
- DE-A1- 102010 023 462
- DE-A1- 102012 101 642
- DE-A1- 102015 213 470
- DE-A1- 2 804 653
- FR-A1- 3 064 701
- US-A1- 2014 202 577

## Beschreibung

### HINTERGRUND DER ERFINDUNG

### 1. Gebiet der Erfindung

Die Erfindung betriff ein medizinisches, insbesondere dentalmedizinisches, Gebläse zum Absaugen oder Verdichten eines gasförmigen Arbeitsfluids, insbesondere von Luft, mit
a) einer Verdichtereinheit mit einem Außengehäuse, welches eine Einlassöffnung für das Arbeitsfluid und eine Auslassöffnung für das Arbeitsfluid umfasst, die strömungstechnisch miteinander verbunden sind, und welches einen Verdichtersektor und einen Antriebssektor definiert;
b) einer Gebläseeinheit mit einem Radiallaufrad in einem Spiralgehäuse, welche in dem Verdichtersektor untergebracht ist und durch welche Arbeitsfluid von der Einlassöffnung zur Auslassöffnung förderbar ist, wobei die Drehachse des Radiallaufrades die Längsachse und eine axiale Richtung der Verdichtereinheit definiert;
c) einem Elektromotor, insbesondere einem elektronisch kommutierten Elektromotor, welcher in dem Antriebssektor untergebracht ist und durch welchen das Radiallaufrad antreibbar ist;
d) einem schallisolierenden Dämmsystem.

### 2. Beschreibung des Standes der Technik

Derartige Gebläse sind vom Markt her bekannt und können je nach externer Beschaltung als Saugmaschinen oder Kompressoren eingesetzt werden.

Insbesondere im dentalen Bereich ist bei solchen Gebläsen ein hoher Wirkungsgrad und eine hohe Effizienz wünschenswert, bei denen eine hohe Gebläseleistung bei gleichzeitig günstigem Energieverbrauch sicherstellt ist. Im dentalen Praxisbetrieb, bei dem das Gebläse zum Absaugen von Flüssigkeiten und Feststoffen dient, die am Behandlungsplatz anfallen, ist das Gebläse häufig nahe der von Mitarbeitern und Patienten genutzten Räume untergebracht. Daher ist dort in besonders hohem Maße eine moderate Geräuschentwicklung wünschenswert. Darüber hinaus ist es stets das Ziel, dass das Gebläse kompakt ist und möglichst geringe Abmessungen hat, damit es gut an einem Behandlungsplatz untergebracht und gegebenenfalls auch mobil gehandhabt werden kann.

Im Hinblick auf die Geräuschentwicklung ist in der EP 2 686 559 B1 eine Flüssigkeit zur Schalldämmung verwendet wird, welche einerseits ein Spiralgehäuse mit einem Radiallaufrad und andererseits einen Elektromotor in jeweils einer Kammer radial umgibt. In radialer Richtung schließt sich dort ein Außengehäuse bzw. dessen Gehäusewand an.

Zwar wurde dort erkannt, dass eine Flüssigkeit zur Schallisolierung herangezogen werden konnte, das so konzipierte Gebläse hat jedoch noch verhältnismäßig große Abmessungen und zeigt in der Praxis noch ein verhältnismäßig hohes Betriebsgeräusch.

### ZUSAMMENFASSUNG DER ERFINDUNG

Es ist daher Aufgabe der Erfindung, ein Gebläse der eingangs genannten Art bereitzustellen, bei dem eine effektive Schalldämpfung bei einem kompakten Gerät verwirklicht ist.

Diese Aufgabe wird bei einem Gebläse der eingangs genannten Art dadurch gelöst, dass
e) das schallisolierende Dämmsystem in dem Verdichtersektor einen ersten und einen zweiten Verdichterdämmraum definiert, welche das Spiralgehäuse in radialer Richtung zumindest teilweise umgeben, wobei in radialer Richtung in dem ersten Verdichterdämmraum ein erstes Flüssigkeitsvolumen aus einer ersten Flüssigkeit und in dem zweiten Verdichterdämmraum ein Feststoff-Dämmkörper vorliegt;
f) das schallisolierende Dämmsystem in dem Antriebssektor einen ersten und einen zweiten Antriebsdämmraum definiert, welche den Elektromotor in radialer Richtung zumindest teilweise umgeben, wobei in radialer Richtung in dem ersten Antriebsdämmraum ein zweites Flüssigkeitsvolumen aus einer zweiten Flüssigkeit und in dem zweiten Antriebsdämmraum eine Feststoff-Dämmschicht vorliegt.

Erfindungsgemäß wurde erkannt, dass es durch eine Kombination von einem Flüssigsystem und einem Feststoffsystem zur Schallisolierung eine so effektive Schallisolierung erreicht werden kann, dass das Gebläse eine im Vergleich zu gängigen Gebläsen geringe Geräuschentwicklung aufweist und demgegenüber außerdem noch äußerst kompakt ausgebildet werden kann. Dies ist insbesondere von großem Vorteil, da für eine noch ausreichende Saugleistung des Gebläses umso höher drehende Elektromotoren mit entsprechend hoher Geräuschentwicklung in einem höheren Frequenzbereich nötig sind, wenn die Abmessungen des Gebläses verringert werden sollen.

Besonders effektiv für die Schallisolierung ist es, wenn
a) der erste Verdichterdämmraum ein Radialraum ist, welcher unmittelbar an das Spiralgehäuse angrenzt;
   und/oder
b) der erste Antriebsdämmraum ein Ringraum ist, welcher unmittelbar an den Elektromotor angrenzt.

Eine gute Schallisolierung kann bereits erreicht werden, wenn die erste Flüssigkeit und/oder die zweite Flüssigkeit Wasser ist. Gegebenenfalls kann die Schallisolation noch verbessert werden, wenn die erste Flüssigkeit und/oder die zweite Flüssigkeit ein Silikon, ein Öl, ein Glykol oder ein Glykolgemisch ist.

Bezogen auf das Feststoffsystem ist es günstig, wenn der Dämmkörper und/oder die Dämmschicht zumindest teilweise aus einem Schaumstoffmaterial gebildet sind.

Dabei ist es von Vorteil und kann die Schallisolierung nochmals verbessert werden, wenn der Dämmkörper und/oder die Dämmschicht aus mehreren, in radialer Richtung aufeinander folgenden Schichtlagen gebildet ist, die getrennt voneinander vorliegen oder ganz oder teilweise als Verbundschicht ausgebildet sind, in der die Schichtlagen miteinander verbunden, insbesondere miteinander verklebt sind;
wobei
a) wenigstens eine Schichtlage aus einem Schaumstoffmaterial und wenigstens eine Schichtlage aus einer Bitumenschwerfolie gefertigt ist;
   und/oder
b) in radialer Richtung aufeinanderfolgende Schichtlagen vorgesehen sind, die abwechselnd aus einem Schaumstoffmaterial und einer Bitumenschwerfolie gebildet sind;
   und/oder
c) vier in radialer Richtung aufeinanderfolgende Schichtlagen vorgesehen sind,;
   und/oder
d) die radial innerste Schichtlage aus eine Bitumenschwerfolie gebildet ist.

Es ist vorteilhaft, wenn das schallisolierende System außerdem
a) in dem zweiten Verdichterdämmraum einen Feststoff-Dämmblock umfasst, der in axialer Richtung zwischen dem ersten Verdichterdämmraum und dem Außengehäuse angeordnet ist;
   und/oder
b) in dem zweiten Antriebsdämmraum einen Feststoff-Dämmblock umfasst, der in axialer Richtung zwischen dem ersten Antriebsdämmraum und dem Außengehäuse angeordnet ist.

Auf diese Weise wird die Schallisolierung auch in axialer Richtung erhöht.

Es ist ferner günstig, wenn
a) das Außengehäuse außerdem einen Ableitsektor definiert, in dem ein Ableitkanal angeordnet ist, der mit einem Strömungsausgang des Spiralgehäuses verbunden ist und zu der Auslassöffnung der Verdichtereinheit führt;
b) das schallisolierende Dämmsystem in dem Ableitsektor einen Ableitdämmraum definiert, welcher den Ableitkanal zumindest teilweise umgibt und in dem ein Feststoff-Schalldämpfervolumen vorliegt.

Auf diese Weise kann auch weitgehend der Abgabeschall durch die Strömung des Arbeitsfluids von dessen Einlassöffnung zu dessen Auslassöffnung gedämpft werden, was insgesamt zur Schallisolierung beiträgt.

In diesem Zusammenhang ist es außerdem von Vorteil, wenn ein Strömungsweg für das Arbeitsfluid aus dem Spiralgehäuse heraus zur Auslassöffnung der Verdichtereinheit ausgebildet ist, wobei dieser Strömungsweg eine oder mehrere Umlenkstellen umfasst, in denen die Strömungsrichtung der Abluft insbesondere um einen Winkel von 90° umgelenkt wird. Auf diese Weise kann bei eine möglichst geringen Grundfläche ein möglichst langer Strömungsweg ausgebildet werden, über den das Arbeitsfluid aus der Verdichtereinheit abgeleitet wird.

Da es strömungstechnisch an Umlenkstellen zu einem Druckverlust kommt, ist es günstig, wenn es wenigstens vor einer Umlenkstelle einen Druck-Kompensationsabschnitt mit einer Engstelle gibt, der in Strömungsrichtung einen verjüngten oder sich verjüngenden Querschnitt und dann wieder einen sich erweiternden Querschnitt definiert.

Besonders effektiv ist es in diesem Fall, wenn der Querschnitt des Strömungsweges in einem Druck-Kompensationsabschnitt von der Engstelle zum wieder erweiterten Querschnitt sich um einen Faktor zwischen 1,1 und 1,3, vorzugsweise um einen Faktor von etwa 1,24 oder etwa 1,3, erweitert.

Um außerdem die Übertragung von Körperschall zu verringern, ist es günstig, wenn das schallisolierende Dämmsystem eine Lagerstruktur umfasst, mittels welcher der Elektromotor und/oder das Spiralgehäuse schwimmend gegenüber dem Außengehäuse gelagert ist.

Besonders effektiv kann hierfür die Lagerstruktur den Feststoff-Dämmkörper und/oder die Feststoff-Dämmschicht und/oder einen oder beide der Feststoff-Dämmblöcke gemäß Anspruch 6 umfasst.

Da durch die nun möglichen geringen Abmessungen bei gleichzeitig moderater Geräuschentwicklung die Abwärme des Gebläses ansteigen kann, ist eine effektive Kühlung notwendig, um die Betriebssicherheit des Gebläses sicherzustellen. Für diesen Zweck umfasst das Gebläse ein Kühlsystem, für welches
a) der erste Antriebsdämmraum als Durchstroemungsraum und der erste Verdichterdämmraum als geschlossener Raum ausgebildet sind;
   oder
   der erste Antriebsdämmraum als geschlossener Raum und der erste Verdichterdämmraum als Durchstroemungsraum ausgebildet sind;
      oder
   der erste Antriebsdämmraum und der erste Verdichterdämmraum als Durchstroemungsraum ausgebildet sind;
b) der Durchstroemungsraum mit einem Zuflußanschluss und einem Abflussanschluss verbunden ist, die ihrerseits mit einer Zuflussleitung und einer Abflussleitung zu einem Kühlkreislauf verbunden sind, bei dem die den Durchstroemungsraum durchströmende Flüssigkeit eine Kühlflüssigkeit bereitstellt.

Auf diese Weise wird zumindest die Flüssigkeit in einem Durchstroemungsraum sowohl zur Schallisolierung als auch zur Kühlung verwendet. Wenn der erste Antriebsdämmraum und der erste Verdichterdämmraum als Durchstroemungsraum ausgebildet sind, können diese räumlich getrennt und jeweils mit entsprechenden Anschlüssen verbunden sein. Alternativ kann auch nur einer der Dämmräume mit einem Zufluss- und einem Abflussanschluss verbunden sein, wobei die beiden Dämmräume dann strömungstechnisch miteinander verbunden sind.

Durch die ermöglichte kompakte Bauart ist es vorteilhaft möglich, dass das Gebläse eine Kühlmittel-Versorgungseinheit mit einem Kühlmittelbehälter für die in dem Kühlkreislauf geführte Kühlflüssigkeit und eine Pumpe umfasst. Auf diese Weise kann das Gebläse gegebenenfalls als mobiles Gebläse genutzt werden, ohne dass dieses von einer externen Kühlmittelquelle abhängt.

Vorzugsweise sind der erste Verdichterdämmraum und der erste Antriebsdämmraum durch eine Zwischenwand voneinander getrennt, die als Wärmeleiter und hierfür insbesondere aus Aluminium ausgebildet ist. Auf diese Weise kann Wärme von der ersten Flüssigkeit im ersten Verdichterdämmraum auf die zweite Flüssigkeit im Antriebsdämmraum oder vice versa übertragen werden.

Um die Kühlung der Verdichtereinheit noch zusätzlich zu unterstützen, ist die Einlassöffnung mit einer Ansaugleitung verbunden und das Kühlsystem umfasst einen Wärmetauscher, welcher derart mit der Ansaugleitung und der Abflussleitung des Kühlkreislaufs verbunden ist, dass der Wärmetauscher von dem Arbeitsfluid und Kühlflüssigkeit derart durchströmt wird, dass Wärme von der Kühlflüssigkeit auf das Arbeitsfluid übertragen und die Kühlflüssigkeit gekühlt wird. Auf diese Weise wird die Ansaugluft zum Kühlen des Kühlkreislaufs genutzt.

Bei am Markt bekannten Gebläsen mit vergleichsweiser Leistung wird das Arbeitsfluid - bei Dentalgebläsen ist dies die Ansaugluft in Form eines Spraynebels oder Aerosols, bei Raumtemperatur angesaugt. Durch die Verdichtung kommt es in dem Maße zu einer Erwärmung, dass die Temperatur der Abluft verhältnismäßig hoch ist und abhängig von der Ausführung des Gebläses und der Last zwischen 80° und 100° betragen kann. Im Inneren des Gebläses herrscht bereits eine so hohe Temperatur, dass beispielsweise die Lager des Rotors belastet werden und dadurch eine verringerte Lebensdauer haben. Ablufttemperaturen schaden aber auch der nachfolgenden Installation der Abluftleitungen.

Bei der vorliegenden Erfindung wurde erkannt, dass es dennoch möglich ist, die Ansaugluft zum Kühlen des Kühlkreislaufes zu nutzen oder im Ergebnis die abgegebene Wärme durch das Gebläse über die Abluftleitung abzugeben, ohne die Ablufttemperatur unzulässig zu erhöhen. Das Gebläse muss hierzu nicht durch aufwendigere Maßnahmen von außen gekühlt werden; beispielsweise kann auf externe Lüfter, Konvektionsmaßnahmen, wärmeableitende Anbindungen oder Flächen oder dergleichen verzichtet werden. Dies trägt unterstützend zu der oben angesprochenen Möglichkeit bei, dass das Gebläse bei einer im Vergleich zu gängigen Gebläsen geringen Geräuschentwicklung außerdem noch äußerst kompakt ausgebildet werden kann.

Insbesondere aus dem Zusammenspiel einiger oder aller der oben beschriebenen Maßnahmen ergibt sich der synergetische Effekt, dass die Erwärmung des Arbeitsfluid auf dem Strömungsweg durch das Gebläse so gering ausfällt, dass die Ablufttemperatur unter einem kritischen Schwellenwert liegt, so dass eine Erhöhung der Ablufttemperatur noch möglich ist, ohne dass die an- oder überströmten Bauteile unerwünscht belastet oder geschädigt werden.

Insbesondere im dentalen Bereich kann es vorkommen, dass der Ansaugweg zum Gebläse blockiert wird, beispielsweise, wenn eine dentale Saugkanüle durch Gewebe oder Feststoffpartikel verstopft. Für derartige Fälle ist es günstig, wenn die Einlassöffnung mit einer Ansaugleitung verbunden ist und eine Sicherheitseinrichtung bereitgestellt ist, durch welche ein teilweises oder vollständiges Blockieren der Ansaugleitung erfassbar ist und welche bei einem Blockieren der Ansaugleitung ein Hilfsgas zur Verfügung stellt, welches anstelle des Arbeitsfluids zur Einlassöffnung der Verdichtereinheit strömt.

Dabei umfasst die Sicherheitseinrichtung bevorzugt ein Ventil in einer Hilfsgasleitung umfasst, welche in die Ansaugleitung mündet, wobei die Sicherheitseinrichtung derart eingerichtet ist, dass das Ventil in einer Grundkonfiguration schließt und abgängig von einem oder mehreren Parametern, insbesondere abhängig vom Druck, der Temperatur und/oder dem Volumenstrom, in der Ansaugleitung öffnet.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine perspektivische Ansicht eines vertikal geschnittenen dentalen Gebläses mit einer Verdichtereinheit, die auf einer Kühlmittel-Versorgungseinheit angeordnet ist;
- Figur 2: einen Schnitt der Verdichtereinheit und der Kühlmittel-Versorgungseinheit in der Schnittebene II-II in Figur 1;
- Figur 3: einen Schnitt der Verdichtereinheit in der Schnittebene III-III in Figur 1;
- Figur 4: einen Schnitt der Verdichtereinheit in der Schnittebene IV-IV in Figur 1;
- Figur 5: einen Schnitt der Verdichtereinheit entlang der Schnittlinie V-V in Figur 2;
- Figur 6: einen Schnitt der Verdichtereinheit entlang der Schnittlinie VI-VI in Figur 2;
- Figur 7: einen Schnitt des der Verdichtereinheit entlang der Schnittlinie VII-VII in Figur 2;
- Figur 8: einen Längsschnitt eines Wärmetauschers für die Luftzuleitung der Verdichtereinheit;
- Figur 9: eine perspektivische Ansicht des gemäß Figur 8 geschnittenen Wärmetauschers;
- Figur 10: ein Layout des Gebläses mit einer ergänzenden Sicherheitseinrichtung.

### BESCHREIBUNG BEVORZUGTER AUSFÜHRUNGSBEISPIELE

In den Figuren ist mit 10 insgesamt ein dentalmedizinisches Gebläse bezeichnet, mit dem ein gasförmiges Arbeitsfluid angesaugt oder verdichtet werden kann. Das Gebläse 10 wird insbesondere als Saugeinheit für einen oder mehrere dentale Behandlungsplätze verwendet.

Der Übersichtlichkeit halber sind nicht in jeder Figur alle Bauteile und Komponenten mit Bezugszeichen versehen.

Das Gebläse 10 umfasst eine Verdichtereinheit 12 und beim vorliegenden Ausführungsbeispiel eine Kühlmittel-Versorgungseinheit 14, auf der die Verdichtereinheit 12 angeordnet ist. Das dentale Gebläse 10 kann jedoch bei einer stationären Kühlmittelversorgung auch ohne die Kühlmittel-Versorgungseinheit 14 betrieben werden und dann nur die Verdichtereinheit 12 umfassen. Hierauf und auf die Kühlmittel-Versorgungseinheit 14 wird weiter unten nochmal eingegangen.

Die Verdichtereinheit 12 umfasst ein mehrteiliges Gehäuse 16 mit einem Außengehäuse 18, das einen Innenraum 20 umschließt. Der Innenraum 20 ist funktional in einen Verdichtersektor 22, einen Antriebssektor 24 und einen Ableitsektor 26 unterteilt. Der Verdichtersektor 22 erstreckt sich in dem Außengehäuse 18 von oben nach unten, der Antriebssektor 24 ist in dem Außengehäuse 18 von oben nach unten neben dem Verdichtersektor 22 und bis zu dem Antriebssektor 24 ausgebildet, der sich unterhalb des Antriebssektors 24 und bereichsweise neben dem Verdichtersektor 22 erstreckt. Anders ausgedrückt ist der Ableitsektor 26 auf einen Höhenniveau tiefer als der Antriebssektor 24 ausgebildet und der Verdichtersektor 22 ist auf dem Höhenniveau des Ableitsektors 26 teilweise von diesem umgeben. Das Gehäuse 16 umfasst eine Einlassöffnung 28 und eine Auslassöffnung 30 für das Arbeitsfluid, die strömungstechnisch miteinander verbunden. sind. Das Arbeitsfluid wird durch die Einlassöffnung 28 in den Verdichtersektor 22 geführt, dort verdichtet und weiter über einen Strömungsweg durch den Ableitsektor 26 hindurch und über die Auslassöffnung 30 abgeleitet.

In dem Antriebssektor 18 ist ein Elektromotor 32 angeordnet, welcher seinerseits ein Motorgehäuse 34 umfasst. Der Elektromotor 32 ist in an und für sich bekannter Art und Weise als Innenläufermotor ausgebildet und umfasst einen der Übersichtlichkeit nicht eigens gezeigten Stator sowie einen mit 36 bezeichneten Rotor, der eine Drehwelle 38 ausbildet.

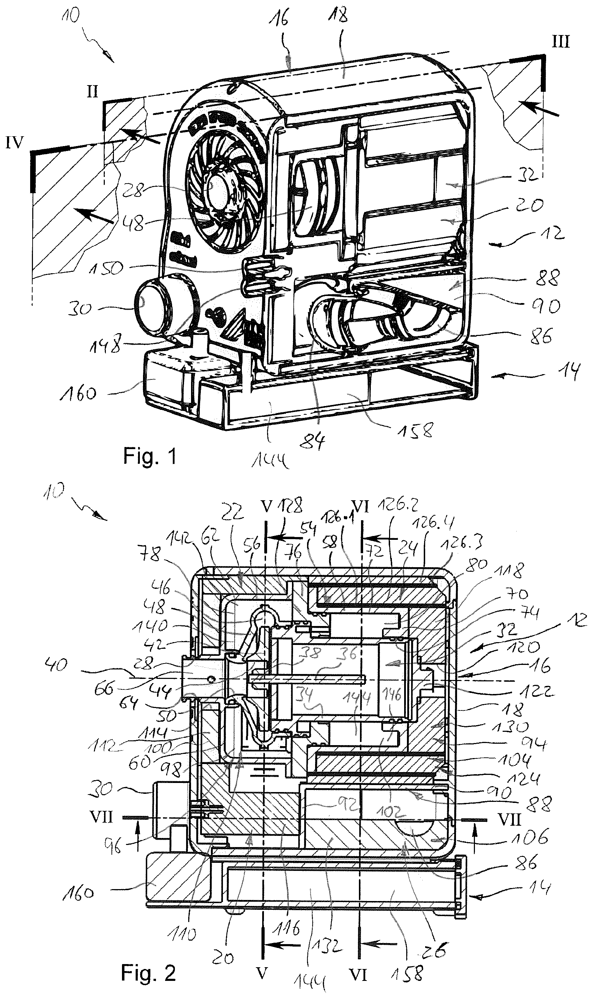

Der Rotor 36 bzw. die Drehwelle 38 verlaufen beim vorliegenden Ausführungsbeispiel koaxial zu einer Längsachse 40 der Verdichtereinheit 12, die nur in Figur 2 gezeigt ist. Die Einlassöffnung 28 des Außengehäuses 18 ist bezogen auf diese Längsachse 40 an einer Stirnseite der Verdichtereinheit 12 angeordnet.

Der Elektromotor 32 ist ein hochdrehender Elektromotor und wird mit Drehzahlen von 40.000 min⁻¹ bis 55.000 min⁻¹ und in der Regel mit einer Drehzahl von etwa 50.000 min⁻¹ betrieben. In der Praxis ist der Elektromotor 32 vorzugsweise ein elektronisch kommutierter Gleichstrommotor.

Bei einer nicht eigens gezeigten Abwandlung kann der Elektromotor 32 auch als Außenläufer konzipiert sein, wodurch ein größeres Drehmoment erhalten werden kann. Ein schnelleres Anlaufen des Elektromotors 32 aus dem Stillstand wird jedoch durch einen Innenläufermotor unterstützt.

Die Drehwelle 38 erstreckt sich aus dem Motorgehäuse 34 hinaus in den Verdichtersektor 22 des Innenraums 20 und trägt dort drehfest ein Radiallaufrad 42, das in bekannter Weise eine nicht gesondert bezeichnete Deckscheibe und auf seiner von der Drehwelle 38 abliegenden Seite eine zentrale Eingangsöffnung 44 aufweist. Die Eingangsöffnung 44 ist koaxial zur Drehwelle 38 ausgebildet. Die erläuterte Längsachse 40 der Verdichtereinheit 12 ist durch die Drehachse des Radiallaufrades 42 definiert, die somit ebenfalls eine axiale Richtung der Verdichtereinheit 12 festlegt.

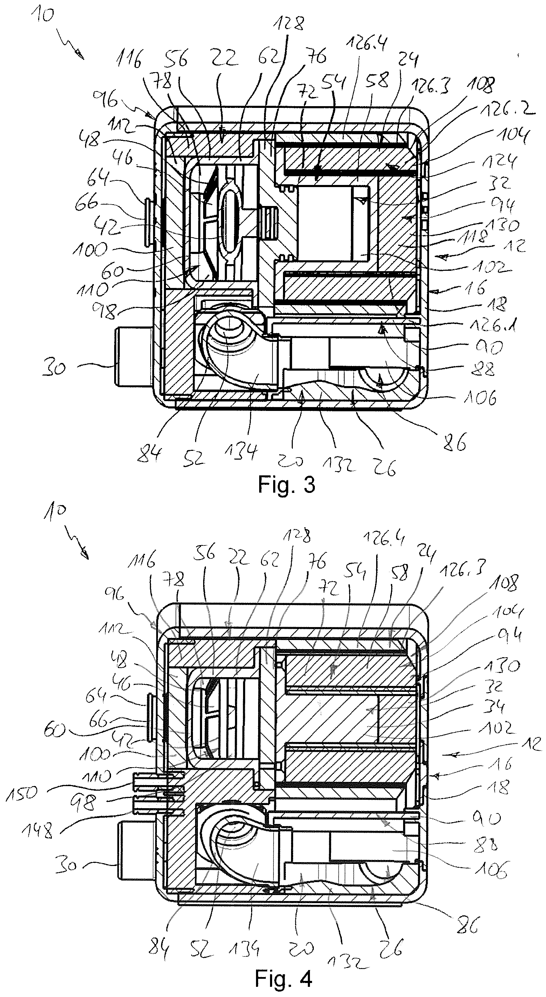

Das Radiallaufrad 42 ist in einem Spiralraum 46 eines Spiralgehäuses 48 untergebracht, welches einen Strömungseinlass 50 hat, der zur Eingangsöffnung 44 des Radiallaufrades 42 führt. Ein in den Figuren 3 bis 5 zu erkennender Strömungsauslass 52 des Spiralgehäuses 48 führt das verdichtete Arbeitsfluid nach unten in den Ableitsektor 26.

Das Radiallaufrad 42 und das Spiralgehäuse 48 bilden gemeinsam eine Gebläseeinheit 42, 48.

Das Spiralgehäuse 48 und das Motorgehäuse 34 sind in einem mehrteiligen Hüllgehäuse 54 aus Kunststoff angeordnet, welches einen ersten Hüllabschnitt 56 aufweist, der das Spiralgehäuse 48 umgibt, und einen zweiten Hüllabschnitt 58 aufweist, der das Motorgehäuse 34 umgibt.

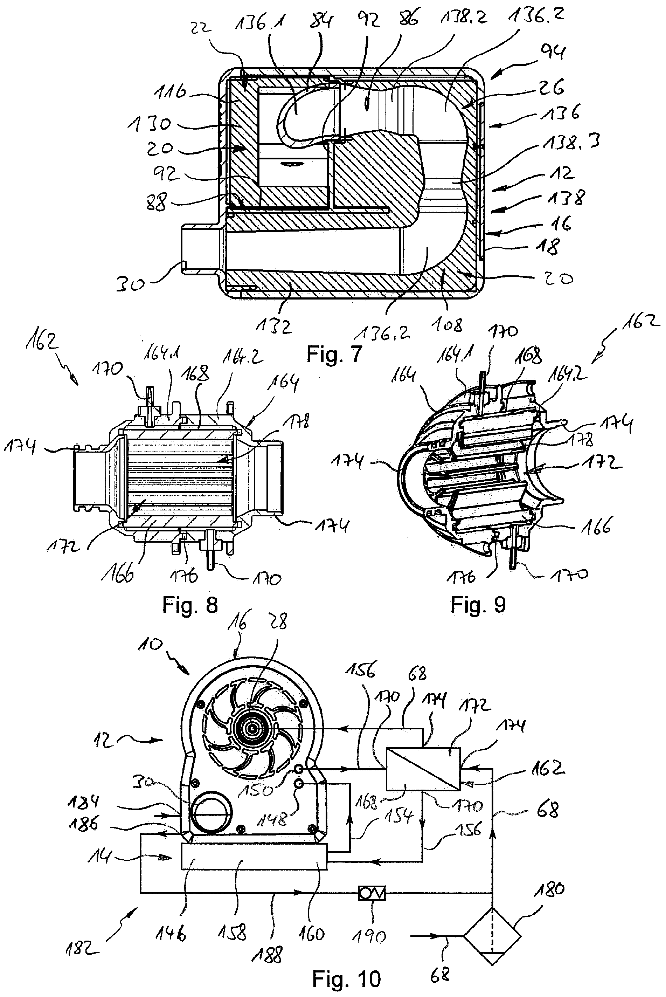

Der erste Hüllabschnitt 56 des Hüllgehäuses 50 hat eine freie Stirnwand 60, die in Richtung auf die Einlassöffnung 28 des Außengehäuses 18 weist, und eine Mantelwand 62. Die Stirnwand 60 umfasst einen Einlass 64, durch den Arbeitsfluid zu der Eingangsöffnung 44 des Radiallaufrades 42 strömen kann. Beim vorliegenden Ausführungsbeispiel ist der Einlass 64 des Hüllgehäuses 50 als Einlassstutzen 66 ausgebildet, der sich koaxial durch die Einlassöffnung 28 des Außengehäuses 18 hindurch nach außen erstreckt und dort als Anschluss für eine Ansaugleitung 68 von außen zugänglich ist. Die Ansaugleitung 68 ist nur in Figur 9 gezeigt.

Der zweite Hüllabschnitt 58 hat eine von dem Spiralgehäuse 48 abliegende freie Stirnwand 70 und eine Mantelwand 72. In der Stirnwand 70 ist koaxial zur Längsachse 40 ein Lagerdurchgang 74 ausgebildet, der das Motorgehäuse 34 in einem Endabschnitt nahe der Stirnwand 70 umgibt und gegen das Motorgehäuse 34 abdichtet.

Zwischen dem ersten Hüllabschnitt 56 und dem zweiten Hüllabschnitt 58 des Hüllgehäuses 54 ist eine Zwischenwand 76 derart ausgebildet, dass einerseits das Spiralgehäuse 48 und damit die Gebläseeinheit 42, 48 von einem Radialraum 78 umgeben ist, der unmittelbar an die Gebläseeinheit 42, 48 angrenzt, und dass andererseits das Motorgehäuse 34 und damit der Elektromotor 32 von einem nur in Figur 2 zu erkennenden Ringraum 80 umgeben sind, der unmittelbar an den Elektromotor 32 angrenzt.

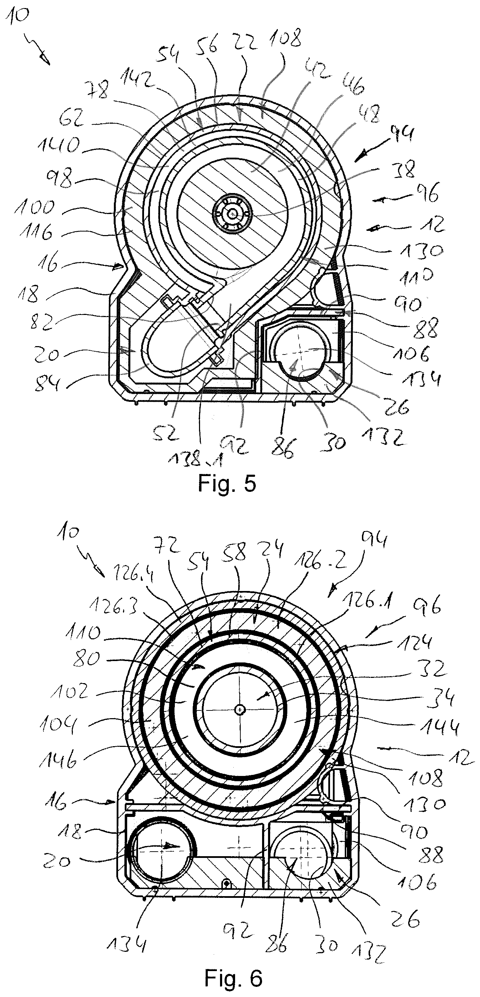

Wie in Figur 5 zu erkennen ist, umfasst der oben angesprochene Strömungsauslass 52 des Spiralgehäuses 48 einen Verbindungskanal 82, der von dem Spiralraum 46 zu einem Umlenkkanal 84 führt, mittels welchem das verdichtete Arbeitsfluid um 90° umgelenkt und in einen Ableitkanal 86 geführt wird, der durch den Ableitsektor 26 hindurch zur Auslassöffnung 30 der Verdichtereinheit 12 führt. Allgemein ausgedrückt ist also der Ableitkanal 86 mit dem Strömungsauslass 52 der Gebläseeinheit 42, 48 verbunden.

Ein Gehäuseeinsatz 88 trennt den Ableitsektor 26 strukturell von dem Verdichtersektor 22 und dem Antriebssektor 24. Wie die Figuren 6 und 7 erkennen lassen, definiert der Gehäuseeinsatz 88 einen Zwischenboden 90, der oberhalb des Ableitkanals 86 vorgesehen ist, und Zwischenwände 92, die den Verdichtersektor 22 von dem Ableitsektor 26 in dem Bereich abtrennen, in dem der Umlenkkanal 84 in dem Verdichtersektor 22 angeordnet ist. Der Zwischenboden 90 und die Zwischenwände 92 können auch einstückig integriert sein.

Die Verdichtereinheit 12 umfasst ein schallisolierendes Dämmsystem 94 und ein Kühlsystem 96, dessen Komponenten teilweise sowohl zur Schallisolierung als auch zur Kühlung der Verdichtereinheit 12 beitragen.

Zunächst wird auf die Komponenten und Bauteile mit Bezug auf das Dämmsystem 94 und die Schallisolierung der Verdichtereinheit 12 und hiernach auf die Komponenten und Bauteile mit Bezug auf das Kühlsystem 96 und die Kühlung der Verdichtereinheit 12 eingegangen.

Das schallisolierende Dämmsystem 94 definiert insgesamt fünf Dämmräume zur Schallisolation, einen ersten, inneren Verdichterdämmraum 98, einen zweiten, äußeren Verdichterdämmraum 100, einen ersten, inneren Antriebsdämmraum 102, einen zweiten, äußeren Antriebsdämmraum 104 und einen Ableitdämmraum 106.

Der erste und der zweite Verdichterdämmraum 98, 100 umgeben die Gebläseeinheit 42, 48 in radialer Richtung zumindest teilweise. Der erste und der zweite Antriebsdämmraum 102, 104 umgeben den Elektromotor 32 in radialer Richtung zumindest teilweise.

Der erste Verdichterdämmraum 98 ist durch oben beschriebenen Radialraum 78 ausgebildet und der erste Antriebsdämmraum 102 ist durch den oben beschriebenen Ringraum 80 ausgebildet.

Der zweite Verdichterdämmraum 100 ist durch den Raum zwischen dem Außengehäuse 18 und dem ersten Hüllabschnitt 56 des Hüllgehäuses 54 sowie den Zwischenwände 92 des Gehäuseeinsatzes 88 definiert. Der zweite Antriebsdämmraum 104 ist durch den Raum zwischen dem Außengehäuse 18 und dem zweiten Hüllabschnitt 58 des Hüllgehäuses 54 sowie dem Zwischenboden 90 des Gehäuseeinsatzes 88 ausgebildet.

Der Ableitdämmraum 106 ist durch den Raum zwischen dem Außengehäuse 18, dem Zwischenboden 90 und den Zwischenwänden 92 des Gehäuseeinsatzes 88 ausgebildet.

Das Dämmsystem 94 zur Schallisolierung umfasst ein Feststoffsystem 108 einerseits und ein Fluidsystem 110 andererseits.

Das Feststoffsystem 108 umfasst einen im zweiten Verdichterdämmraum 100 bezogen auf die Längsachse 40 in axialer Richtung zwischen dem Außengehäuse 18 und dem Hüllgehäuse 54 angeordneten erster Feststoff-Dämmblock 112 aus schalldämmendem Material mit einem Durchgang 114, durch den sich der Einlassstutzen 66 des ersten Hüllabschnittes 56 hindurch erstreckt. Wenn hier und nachfolgend, auch im Zusammenhang mit anderen Komponenten und Bauteilen, allgemein von schalldämmenden Material die Rede ist, ist darunter ein Material zu verstehen, welches für die vorliegenden Frequenzbereiche geeignete schalldämmende Eigenschaften hat.

Der Dämmblock 112 ist beim vorliegenden Ausführungsbeispiel aus einem Schaumstoffmaterial gefertigt. Wenn hier und nachfolgend, auch im Zusammenhang mit anderen Komponenten und Bauteilen, von einem Schaumstoffmaterial die Rede ist, ist dies in der Praxis ein Recyclingschaumstoff, wie er an und für sich bekannt ist. Aber auch jedes andere Schaumstoffmaterial, welches für die vorliegenden Frequenzbereiche geeignete schalldämmende Eigenschaften hat, kann jeweils verwendet werden.

In dem übrigen Bereich des zweiten Verdichterdämmraums 100 ist ein an den zur Verfügung stehenden Raum komplementär angepasster Feststoff-Dämmkörper 116 aus schalldämmendem Material angeordnet. Der Dämmkörper 116 ist ebenfalls aus einem Schaumstoffmaterial gebildet. Wie Figur 5 zeigt, umschließt der Dämmkörper 116 dabei den Umlenkkanal 84 nicht anliegend, wogegen der Dämmkörper 116 das Hüllgehäuse 54 kontaktiert.

Bei einer nicht eigens gezeigten Abwandlung können der erste Dämmblock 112 und der Dämmkörper 116 keine separaten Komponenten sein, sondern Abschnitte einer zusammenhängenden Dämmstruktur 112, 116 sein.

Außerdem umfasst das Festkörpersystem in dem zweiten Antriebsdämmraum 104 bezogen auf die Längsachse 40 in axialer Richtung zwischen dem Außengehäuse 18 und dem Hüllgehäuse 54 angeordneten zweiten Feststoff-Dämmblock 118 aus schalldämmendem Material mit einer Ausnehmung 120, in welcher das Motorgehäuse 34 abgestützt ist. Das Motorgehäuse 34 weist hierfür einen stirnseitigen Lagervorsprung 122 auf, der in die Ausnehmung 120 des zweiten Materialblocks 118 hineinragt. Der zweite Dämmblock 118 ist ebenfalls aus einem Schaumstoffmaterial gefertigt.

In dem übrigen, ringförmigen Bereich des zweiten Verdichterdämmraums 100, der radial um den zweiten Hüllabschnitt 58 des Hüllgehäuses 54 und den Dämmblock 118 herum vorhanden ist, ist eine Feststoff-Dämmschicht 124 aus schalldämmendem Material ausgebildet. Diese Dämmschicht 124 ist ihrerseits aus mehreren, in radialer Richtung aufeinander folgenden Schichtlagen 126 gebildet, wobei beim vorliegenden Ausführungsbeispiel in Richtung nach radial außen vier Schichtlagen 126.1, 126.2, 126.3 und 126.4 gezeigt sind. Die erste Schichtlage 126.1 und die dritte Schichtlage 126.3 sind dabei aus einer Bitumenschwerfolie gebildet und haben eine Dicke von etwa 1 mm bis 2 mm, vorzugsweise von 1,5 mm. Die zweite Schichtlage 126.2 ist wieder aus Schaumstoffmaterial und hat eine Dicke von 8 mm bis 12 mm, bevorzugt von 10 mm. Die vierte Schichtlage 126.4 ist ebenfalls wieder aus Schaumstoffmaterial gefertigt und hat eine Dicke von 3 mm bis 7 mm, bevorzugt von 5 mm.

Die Schichtlagen 126 können voneinander getrennt vorliegen oder ganz oder teilweise als Verbundschicht ausgebildet sein, in der die Schichtlagen 126 miteinander verklebt sind.

Bei einer nicht eigens gezeigten Abwandlung können auch der Dämmblock 112 und/oder der Dämmkörper 116 in dem zweiten Verdichterdämmraum 100 und/oder auch der zweite Dämmblock 118 in dem zweiten Antriebsdämmraum 104 in dieser Weise aus geeigneten Schichtlagen ausgebildet sein und/oder die Dämmschicht 124 kann einstückig aus ein und demselben Dämmmaterial, wie beispielsweise einem Recyclingschaum, ausgebildet sein.

Bei einer weiteren nicht eigens gezeigten Abwandlung können der zweite Dämmblock 118 und die Dämmschicht 124 keine separaten Komponenten sein, sondern Abschnitte einer zusammenhängenden Dämmstruktur 118, 124 sein.

Um neben der Schallisolierung eine Übertragung von Körperschall von dem Elektromotor 32 und dem Spiralgehäuse 48 auf das Außengehäuse 18 grundsätzlich zu reduzieren, sind der Elektromotor 32 und das Spiralgehäuse 48 schwimmend gelagert. Dies wird beim hier gezeigten Ausführungsbeispiel dadurch erreicht, dass das Motorgehäuse 34 durch den zweiten Dämmblock 118 schwimmend gelagert ist und außerdem das Hüllgehäuse 54 schwimmend gelagert ist. Dessen Zwischenwand 76 dient dabei nicht nur als Trennwand zwischen dem Radialraum 78 und dem Ringraum 80, sondern ergänzend als Lagerflansch 128, durch den das Motorgehäuse 34 in dem Hüllgehäuse 54 radial gelagert ist.

Beim vorliegenden Ausführungsbeispiel umfasst das schallisolierende Dämmsystem 94 somit eine Lagerstruktur 130, mittels welcher der Elektromotor 32 und das Spiralgehäuse 48 schwimmend gegenüber dem Außengehäuse 18 gelagert sind.

Bei vorliegenden Ausführungsbeispiel ist diese schwimmende Lagerung durch die Feststoffmaterialkomponenten 112, 116, 118 und 124, d.h. durch den ersten Dämmblock 112, den Dämmkörper 116, den zweiten Dämmblock 118 und die Dämmschicht 124 zugleich eine Lagerstruktur 130 ausgebildet, Die Lagerstruktur kann auch nur eine oder einige der genannten Feststoffmaterialkomponenten 112, 116, 118, 124 umfassen.

Das Feststoffsystem 110 des Schallisolierenden Dämmsystems 94 umfasst außerdem ein Feststoff-Schalldämpfervolumen 132 aus schalldämmendem Material, welches den Ableitkanal 86 umgibt und den Ableitdämmraum 106 ausfüllt. In den Figuren 2 bis 6 ist ein jeweils oberer Teil des Schalldämpfervolumens 132 weggelassen und nicht dargestellt, um einen Einblick in den Ableitsektors 24 und den Ableitdämmtraum 106 zu zeigen. Das schalldämmende Material des Schalldämpfervolumens 132 ist beim vorliegenden Ausführungsbeispiel ebenfalls ein Schaumstoffmaterial.

Darüber hinaus tragen ergänzend strukturelle Maßnahmen zur Schalldämpfung der Abluft bei, die den mit 134 bezeichneten Strömungsweg für die Abluft aus dem Spiralgehäuse 48 heraus zur Auslassöffnung 30 der Verdichtereinheit 12 betreffen, was anhand der Figuren 5, 6 und 7 beschrieben wird. Dieser Strömungsweg 134 ist insgesamt durch den Verbindungskanal 82, den Umlenkkanal 84 und den Ableitkanal 86 gebildet.

Der Strömungsweg 134 umfasst mehrere Umlenkabschnitte 136, in denen die Strömungsrichtung der Abluft umgelenkt wird, um innerhalb des zur Verfügung stehenden Bauraumes des Ableitsektors 24 einen möglichst langen Strömungsweg für die Abluft bereitzustellen. Beim vorliegenden Ausführungsbeispiel gibt es drei solche Umlenkabschnitte 136. Ein erster Umlenkabschnitt 136.1 ist durch den bereits beschriebenen Umlenkkanal 84 gebildet, diesem folgen in Strömungsrichtung zwei weitere Umlenkabschnitte 136.2 und 136.3. Beim vorliegenden Ausführungsbeispiel wird die Abluft in jedem Umlenkabschnitt 136 um 90° umgelenkt.

Bei einer Umlenkung einer Gasströmung um einen Winkel von 90° gibt es einen verhältnismäßig großen Druckverlust. Zwar wäre der Druckverlust bei einer Umlenkung um einen kleineren Winkel moderater, der vorhandene Bauraum erfordert jedoch größere Umlenkungen im Ableitkanal 86, um den Strömungsweg 134 im Ableitsektor 26 zu realisieren. Daher gibt es im Strömungsweg 134 Druck-Kompensationsabschnitte 138 mit einer Engstelle. Hierfür definieren die Druck-Kompensationsabschnitte 138 in Strömungsrichtung einen verjüngten oder sich verjüngenden und dann wieder einen sich erweiternden Querschnitt, wobei in Strömungsrichtung vor jedem Umlenkabschnitt 136.1, 136.2 und 136.3 ein entsprechender Druck-Kompensationsabschnitt 138.1, 138.2 bzw. 138.3 vorhanden ist.

Der erste Druck-Kompensationsabschnitt 138.1 ist nur in Figur 5 bezeichnet und ist dabei dadurch verwirklicht, dass der Verbindungskanal 82 zwischen dem Spiralraum 46 und dem Umlenkkanal 86 einen kleineren Querschnitt als der Umlenkkanal 86 hat und somit im Vergleich zu diesem verjüngt ist, wobei sich der Strömungsweg 134 hiernach zum Umlenkkanal 86 hin schlagartig über eine Stufe aufweitet; dies veranschaulicht insbesondere Figur 5. Der Querschnitt wird dabei um einen Faktor von etwa 1,3 bis 1,95, vorzugsweise um einen Faktor von etwa 1,3 erweitert.

Wie in Figur 7 zu erkennen ist, verjüngen sich die Querschnitte des Ableitkanals 86 in den übrigen Druck-Kompensationsabschnitten 138.2 und 138.3 jeweils konisch und weiten sich dann zu dem jeweiligen Umlenkabschnitt 136.2, 136.3 wieder konisch auf. Der Faktor zwischen den Querschnitten der Engstellen der Druck Kompensationsabschnitte 138 und den Querschnitten des Ableitkanals 86 unmittelbar vor und hinter den Druck-Kompensationsabschnitten 138 beträgt etwa 1,24. Bei nicht eigens gezeigten Abwandlungen liegt der Faktor zwischen 1,1 und 1,3 und beträgt bei einer dort nochmals bevorzugten Variante etwa 1,3.

Das oben angesprochene Fluidsystem 110 des schallisolierenden Dämmsystems 94 umfasst ein erstes Flüssigkeitsvolumen 140 aus einer ersten Flüssigkeit 142 in dem ersten Verdichterdämmraum 98 und ein zweites Flüssigkeitsvolumen 144 aus einer zweiten Flüssigkeit 146 in dem ersten Antriebsdämmraum 102, wobei diese Dämmräume 98 und 102, wie oben erwähnt, durch den Radialraum 78 bzw. durch den Ringraum 80 ausgebildet sind.

Durch Kombination des Feststoffsystems 108 und des Fluidsystems 110 zur Schallisolierung wird eine effektive Schallisolierung und hierfür eine Anpassung an den Frequenzbereich des Schalls, der insbesondere von dem Radiallaufrad 42 und dem Elektromotor 32 abgegeben wird, erreicht.

Bezogen auf das Spiralgehäuse 48 sind in Richtung nach radial außen beim vorliegenden Ausführungsbeispiel insgesamt vier Schichten ausgebildet, die zur Schallisolierung beitragen, nämlich die erste Flüssigkeit 140, der erste Hüllabschnitt 56 des Hüllgehäuses 54, der Dämmkörper 116 und das Außengehäuse 18. Diese vier Schichten können dabei mit einer Gesamtdicke in radialer Richtung von weniger als 20 mm realisiert werden.

Bezogen auf den Elektromotor 32 sind bereits durch die Schichtlagen 126 verschiedene Lagen mit unterschiedlichen Schalldämmeigenschaften realisiert, wodurch eine effektive Anpassung an den Frequenzbereich des Elektromotors 32 erreicht werden kann, dessen Schallabgabe gedämmt werden soll. Ausgehend von dem Motorgehäuse 34 sind beim vorliegenden Ausführungsbeispiel auf diese Weise insgesamt sieben Schichten ausgebildet, die zur Schallisolierung beitragen, nämlich in Richtung nach radial außen die zweite Flüssigkeit 146, der zweite Hüllabschnitt 58 des Hüllgehäuses 54, die vier Schichtlagen 126.1, 126.2, 126.3 und 126.4 und das Außengehäuse 18. Diese sieben Schichten können dabei mit einer Gesamtdicke in radialer Richtung von weniger als 40 mm realisiert werden.

Die Flüssigkeiten 140 und 146 dienen neben ihrer Funktion zur Schallisolierung außerdem als Wärmeleiter bzw. als Kühlflüssigkeit bzw. als Wärmeleiter des oben erwähnten Kühlsystems 96, mit denen die im Betrieb der Verdichtereinheit durch den Elektromotor 32 und durch die Gebläseeinheit 42, 48, d.h. das Radiallaufrad 42 in dem Spiralgehäuse 48, erzeugte Wärme als Abwärme abgeführt werden kann.

Bei den Flüssigkeiten 140, 146 kann es sich um Wasser, aber auch um Flüssigkeiten mit demgegenüber höherer Viskosität und mit einer für die Wärmeabfuhr hinreichenden Wärmeleitfähigkeit handeln. Hierfür kommen beispielsweise Silikone, Öle, Glykole, Glykolgemische und dergleichen in Betracht.

Beim vorliegenden Ausführungsbeispiel ist die erste Flüssigkeit 140 in dem ersten Verdichterdämmraum 98 ein solches Material mit höherer Viskosität, wogegen die zweite Flüssigkeit 146 in dem ersten Antriebsdämmraum 102 Wasser ist.

Für das Kühlsystem 96 ist der erste Verdichterdämmraum 98 ist als geschlossener Raum ausgebildet, wogegen der erster Antriebsdämmraum 102 als Durchströmungsraum konzipiert ist, der über innere, nicht eigens gezeigte und getrennt geführte Strömungskanäle mit einem Zuflussanschluss 148 und einem Abflussanschluss 150 der Verdichtereinheit 12 verbunden ist, so dass ein Kühlkreislauf 152 ausgebildet werden kann. Die Anschlüsse 148 und 150 können insbesondere über eine Zuflussleitung 154 bzw. eine Abflussleitung 156, die in Figur 10 gezeigt sind, mit der eingangs erwähnten Kühlmittel-Versorgungseinheit 14 verbunden werden.

Die Kühlmittel-Versorgungseinheit 14 umfasst einen Kühlmittelbehälter 158 für die zweite Flüssigkeit 146, die hier folglich Kühlwasser ist, und eine Pumpe 160, vorzugsweise eine Kreiselpumpe, so dass die Flüssigkeit 146 im Kreislauf durch den ersten Antriebsdämmraum 102 gefördert werden kann. Hiervon bleibt aber die Funktion der Flüssigkeit 146 auch als Schallisolierung unberührt. Auch die erste Flüssigkeit 140 erfüllt ihre schallisolierende Wirkung ungeachtet ihrer Eigenschaft als Wärmeleiter.

Damit die von der ersten Flüssigkeit 140 in dem ersten Verdichterdämmraum 98 aufgenommen Wärme der Radiallaufrades 42 bzw. des Spiralgehäuses 48 effektiv abgeführt werden kann, sind der Radialraum 78 und der Ringraum 80 in der beschriebenen Weise in axialer Richtung durch die Zwischenwand 76 getrennt nebeneinander angeordnet. Außerdem ist die Zwischenwand 76 des Hüllgehäuses 54 als Wärmeleiter ausgebildet und aus einem gut wärmeleitenden Material gefertigt, wobei beim vorliegenden Ausführungsbeispiel Aluminium verwendet ist.

Auf diesem Wege wird die Abwärme der Gebläseeinheit 42, 48 auf die erste Flüssigkeit 140, von dieser auf die Zwischenwand 76 und weiter auf die zweite Flüssigkeit 146, d.h. vorliegend auf das Kühlwasser im Kühlkreislauf 152, übertragen und von dieser schließlich abgeführt.

Die Abwärme des Elektromotors 32 wird über das Motorgehäuse 34 unmittelbar auf die Flüssigkeit 146, d.h. auf das Kühlwasser im Kühlkreislauf 152 übertragen und von dieser abgeführt.

Bei einer nicht eigens gezeigten Abwandlung sind der erste Antriebsdämmraum 102 als geschlossener Raum und der erste Verdichterdämmraum 98 als Durchströmungsraum ausgebildet. Das oben zum ersten Antriebsdämmraum 102 und zum ersten Verdichterdämmraum 98 Gesagte kehrt sich in diesem Fall sinngemäß entsprechend um. In diesem Fall dient also die erste Flüssigkeit 142 als Kühlflüssigkeit im Kühlkreislauf 152. Bei einer weiteren nicht eigens gezeigten Abwandlung können sowohl der erste Antriebsdämmraum 102 als auch der erste Verdichterdämmraum 98 als Durchströmungsraum konzipiert sein, so dass beide Räume Teil des Kühlkreislaufs 152 sind. Hierbei können die beiden Räume 102 und 98 gegebenenfalls strömungstechnisch miteinander verbunden sein. In diesem Fall sind also die Flüssigkeiten 142 und 146 ein und dieselbe Flüssigkeit, die einerseits als Kühlflüssigkeit und andererseits als Schallisolation dient.

Das Kühlsystem 96 umfasst außerdem einen in den Figuren 8 und 9 im Detail gezeigten Wärmetauscher 162, der in der Ansaugleitung 68 angeordnet ist und von dem Arbeitsfluid durchströmt wird, was wiederum in Figur 10 veranschaulicht ist. Der Wärmetauscher 162 ist als Strangpressprofil, vorzugsweise aus Aluminium, gefertigt und umfasst einen Außenmantel 164 und einen Innenmantel 166, zwischen denen ein Ringraum 168 ausgebildet ist. Der Außenmantel 164 weist zwei in den Ringraum 168 mündende Fluidanschlüsse 170 auf, so dass der Ringraum 168 von einem Fluid durchströmt werden kann.

Der Innenmantel 166 begrenzt nach radial innen einen axialen Durchströmungsraum 172, der sich in axialer Richtung zwischen zwei Leitungsanschlüssen 174 erstreckt, zu denen der Außenmantel 164 gebildet ist. Von dem Innenmantel 166 ragen nach radial innen sich in axialer Richtung erstreckende Längsrippen 176 ab, durch welche die Kontaktoberfläche für das Fluid, das den Durchströmungsraum 172 durchströmt, erhöht ist.

Der Außenmantel 164 ist aus zwei aneinander befestigten Teilen 164.1 und 164.2 gebildet, die über eine O-Ring-Dichtung 176 fluiddicht miteinander verbunden sind, wobei jedes Teil 164.1, 164.2 jeweils einen Fluidanschluss 170 definiert. Der Innenmantel 166 mit den Längsrippen 176 ist als separates Einsteckstück ausgebildet, das stirnseitig fluiddicht an den Außenmantel 164 anliegt.

Wie Figur 10 veranschaulicht, ist der Wärmetauscher 162 so über dessen Leitungsanschlüsse 174 in die Ansaugleitung 68 der Verdichtereinheit 12 integriert, dass das Arbeitsfluid, vorliegend also die Ansaugluft, durch den Durchströmungsraum 172 des Wärmetauschers 162 geführt wird. Über seine Fluidanschlüsse 170, die zum Ringraum 168 führen, ist der Wärmetauscher 162 in die Abflussleitung 156 integriert.

Auf diese Weise wird die Ansaugluft, die durch die Ansaugleitung 68 von der Verdichtereinheit 12 angesaugt wird, zu Kühlung der Kühlflüssigkeit 146 genutzt, die erwärmt aus der Verdichtereinheit 12 austritt. Obwohl dadurch die Ansaugluft erwärmt wird, bevor sie in die Verdichtereinheit 12 eintritt, und dadurch auch die von der Ansaugluft durchströmten Bauteile und Komponenten in deren Nachbarschaft stärker erwärmt werden, als ohne Vorschaltung des Wärmetauschers 162, kann durch die innere Kühlung der Verdichtereinheit 12 mittels der Kühlflüssigkeit 146 dennoch eine ausreichende Kühlung bewirkt werden.

Durch dieses Konzept kann insbesondere das hier veranschaulichte Gebläse 10 mit Verdichtereinheit 12 und Kühlmittel-Versorgungseinheit 14 als autarkes Stand-Alone-Gerät bereitgestellt werden. In diesem Fall kann die Flüssigkeit 146 einen Anteil an Frostschutzmittel enthalten, so dass die Flüssigkeit 146 bei der Lagerung und/oder dem Transport des Gebläses 10 nicht einfrieren kann.

An dieser Stelle soll betont sein, dass dieses Konzept nicht auf das hier beschriebene konkrete Ausführungsbeispiel des Wärmetauschers 162 beschränkt ist, sondern mit jedem Gas/Flüssig-Wärmetauscher verwirklicht werden kann, der die gewünschten und erforderlichen Spezifikationen erfüllt, sofern diese Ausführungsformen in den Rahmen der nachfolgenden Ansprüche fallen.

Darüber hinaus kann die Versorgung mit der Flüssigkeit 146 auch nicht durch die von dem Gebläse 10 mitgeführte Kühlmittel-Versorgungseinheit 14 erfolgen, sondern durch das Verbrauchswasser eines dentalen Behandlungsstuhl erfolgen. Dabei kann insbesondere das Spülwasser einer Spüleinheit im Behandlungsstuhl verwendet werden, welches durch die Verdichtereinheit geführt werden kann, bevor es in die Spüleinheit am Behandlungsstuhl fließt. Die von dem Spülwasser durch- oder überströmten Kunststoff-Bauteile der Verdichtereinheit können eine KTW-Zulassung haben und entsprechend für Trinkwasser geeignet sein.

Im Betrieb eines dentalen Gebläses kann es vorkommen, dass das Gebläse in der Art unsachgemäß betrieben wird, dass die Verdichtereinheit 12 aktiviert ist, aber die Ansaugleitung 68 verschlossen ist. Bei einer dentalen Anwendung ist die Ansaugleitung 68 beispielsweise mit einer Saugkanüle verbunden, wobei die Ansaugluft dann stromauf des Wärmetauschers 162 zunächst durch einen an und für sich bekannten Flüssigkeit-/Partikelabscheider geführt wird, der in Figur 10 veranschaulicht und mit 180 bezeichnet ist.

Eine Saugkanüle kann beispielsweise durch Fremdköper blockiert sein, so dass keine Ansaugluft mehr zu der Verdichtereinheit 12 gelangt. Da aber auch die durch die Verdichtereinheit 12 strömende Ansaugluft zur Kühlung der Bauteile und Komponenten beiträgt und insbesondere Wärme an dem Radiallaufrad 42 und der Drehwelle 38 aufnimmt, kann die Kühlflüssigkeit 146 allein keine ausreichende Kühlung mehr bewirken.

Daher umfasst das Gebläse 10 eine Sicherheitseinrichtung 182, mit welcher der Einlassöffnung 28 der Verdichtereinheit 12 ein Hilfsgas als Durchströmungsgas zugeführt werden kann. Zu diesem Zweck ist der Ableitkanal 86 der Verdichtereinheit 12 über einen Hilfsgaseinlass 184 mit der Umgebung und über einen Hilfsgasauslass 186 und eine daran angeschlossene Hilfsgasleitung 188 stromauf des Wärmetauschers 162 mit der Ansaugleitung 68 verbunden. Als Hilfsgas wird vorliegend jedes Gas verstanden, dass durch den Hilfsgaseinlass 184 in den Ableitkanal 86 ein- und durch den Hilfsgasauslass 186 wieder aus diesem herausströmt. In der Praxis wird das Hilfsgas durch die Umgebungsluft bereitgestellt; es kann jedoch auch ein separates Hilfsgas-Reservoir vorgesehen sein.

In der Hilfsgasleitung 188 ist ein Ventil 190 angeordnet, welches den Strömungsweg in Richtung auf die Ansaugleitung 68 blockiert, wenn dort im Normalbetrieb auftretende Betriebsparameter vorliegen, wenn der Ansaugweg frei ist und Ansaugluft durch die Ansaugleitung 68 zur Verdichtereinheit 12 strömt. Gegebenenfalls kann auch in oder an dem Hilfsgaseinlass 184 ein Ventil vorgesehen sein, welches schließt, wenn im Ableitkanal 86 keine Abweichungen von Bedingungen auftreten, die im Normalbetrieb vorliegen.

Beispielsweise kann das Ventil 190 druckabhängig sein. Wenn nun die Ansaugleitung 68 stromauf der Hilfsgasleitung 188 blockiert ist, wird durch bei weiterem Betrieb der Verdichtereinheit 12 in der Ansaugleitung 68 ein Unterdruck erzeugt, bis schließlich das Ventil 190 öffnet. Durch den vorliegenden Unterdruck wird nun Hilfsgas, d.h. vorliegend Umgebungsluft, durch den Hilfsgaseinlass 184, weiter durch den Ableitkanal 86 und über den Hilfsgasauslass 186 und die Hilfsgasleitung 188 in die Ansaugleitung 68 angesaugt. Dieses Hilfsgas strömt dann durch die Verdichtereinheit 12, wodurch die für die ausreichende Kühlung der Verdichtereinheit 12 notwendige Durchströmung wieder hergestellt ist.

Ein druckabhängiges Ventil kann durch jedes Ventil bereitgestellt werden, welches abhängig von einem Druckwert angesteuert werden kann. Anstelle des Druckes kann auch der Volumenstrom in der Ansaugleitung 68 überwacht werden. Wenn dieser einen vorgegebenen Schwellenwert unterschreitet, öffnet das dann volumenstromabhängige Ventil 190. Weiter alternativ kann auch die Temperatur der Kühlflüssigkeit 146 als Steuerparameter genutzt werden und das Ventil 190 öffnet, wenn die Kühlflüssigkeit 146 zu warm wird, da kein Strömungsfluid mehr durch den Wärmetauscher 162 geführt wird.

Insbesondere durch das schallisolierende Dämmsystem 94 mit der Kombination einer Schallisolierung durch das Feststoffsystem 108 und das Fluidsystem 110 ist es möglich, dass die Verdichtereinheit 12 trotz des hochdrehenden Elektromotors 32 im Betrieb nur einen moderaten Geräuschpegel erzeugt. In der Praxis konnten bei einer Drehzahl des Elektromotors 32 von 50.000 min⁻¹ ein Pegel von 45 dB(A) erreicht werden.

Bei einer Drehzahl von 50.000 min⁻¹ kann eine Saugleistung von 300 l min⁻¹ bei 140 mbar erreicht werden.

Dabei können gegenüber am Markt bekannten Verdichtern mit vergleichbarer Saugleistung deutlich reduzierte Abmessungen erreicht werden. Die Verdichtereinheit 12 hat Abmessungen mit einer Länge axialer Richtung der Längsachse 40 von 160mm bis 210mm, einer Breite von 100mm bis 150mm und einer Höhe von 135mm bis 185mm. Das hier beschrieben Ausführungsbeispiel hat die Maße 185mm (L) x 124mm (B) x 159mm (H).

Diese kompakten Abmessungen sind ergänzend durch das Kühlsystem 96 und dabei durch die Kombination des Fluidsystems 110 zur Schallisolierung und des Kühlsystems 96 möglich, wobei die Kühlleistung noch durch den ergänzenden Wärmetauscher 162 in der Ansaugleitung effektiv unterstützt wird.

## Patentansprüche

1. Medizinisches, insbesondere dentalmedizinisches, Gebläse zum Absaugen oder Verdichten eines gasförmigen Arbeitsfluids, insbesondere von Luft, mit
a) einer Verdichtereinheit (12) mit einem Außengehäuse (18), welches eine Einlassöffnung (28) für das Arbeitsfluid und eine Auslassöffnung (30) für das Arbeitsfluid umfasst, die strömungstechnisch miteinander verbunden sind, und welches einen Verdichtersektor (22) und einen Antriebssektor (24) definiert;
b) einer Gebläseeinheit (42, 48) mit einem Radiallaufrad (42) in einem Spiralgehäuse (48), welche in dem Verdichtersektor (22) untergebracht ist und durch welche Arbeitsfluid von der Einlassöffnung (28) zur Auslassöffnung (30) förderbar ist, wobei die Drehachse des Radiallaufrades (42) die Längsachse (40) und eine axiale Richtung der Verdichtereinheit (12) definiert;
c) einem Elektromotor (32), insbesondere einem elektronisch kommutierten Elektromotor, welcher in dem Antriebssektor (26) untergebracht ist und durch welchen das Radiallaufrad (42) antreibbar ist;
d) einem schallisolierenden Dämmsystem (94); wobei
e) das schallisolierende Dämmsystem (94) in dem Verdichtersektor (22) einen ersten und einen zweiten Verdichterdämmraum (98, 100) definiert, welche das Spiralgehäuse (48) in radialer Richtung zumindest teilweise umgeben, wobei in radialer Richtung in dem ersten Verdichterdämmraum (98) ein erstes Flüssigkeitsvolumen (140) aus einer ersten Flüssigkeit (142) und in dem zweiten Verdichterdämmraum (100) ein Feststoff-Dämmkörper (116) vorliegt;
f) das schallisolierende Dämmsystem (94) in dem Antriebssektor (24) einen ersten und einen zweiten Antriebsdämmraum (102, 104) definiert, welche den Elektromotor (32) in radialer Richtung zumindest teilweise umgeben, wobei in radialer Richtung in dem ersten Antriebsdämmraum (102) ein zweites Flüssigkeitsvolumen (146) aus einer zweiten Flüssigkeit (146) und in dem zweiten Antriebsdämmraum (104) eine Feststoff-Dämmschicht (124) vorliegt,
wobei
das Gebläse (10) ein Kühlsystem (96) umfasst, für welches
g) der erste Antriebsdämmraum (102) als Durchströmungsraum und der erste Verdichterdämmraum (98) als geschlossener Raum ausgebildet sind;
oder
der erste Antriebsdämmraum (102) als geschlossener Raum und der erste Verdichterdämmraum (98) als Durchströmungsraum ausgebildet sind;
oder
der erste Antriebsdämmraum (102) und der erste Verdichterdämmraum (98) als Durchströmungsraum ausgebildet sind;
h) der Durchströmungsraum mit einem Zuflussanschluss (148) und einem Abflussanschluss (150) verbunden ist, die ihrerseits mit einer Zuflussleitung (154) und einer Abflussleitung (156) zu einem Kühlkreislauf (152) verbunden sind, bei dem die den Durchströmungsraum durchströmende Flüssigkeit (142; 146) eine Kühlflüssigkeit bereitstellt,
**dadurch gekennzeichnet, dass** die Einlassöffnung (28) mit einer Ansaugleitung (68) verbunden ist und dass das Kühlsystem (96) einen Wärmetauscher (162) umfasst, welcher derart mit der Ansaugleitung (68) und der Abflussleitung (156) des Kühlkreislaufs (152) verbunden ist, dass der Wärmetauscher (162) von dem Arbeitsfluid und Kühlflüssigkeit derart durchströmt wird, dass Wärme von der Kühlflüssigkeit auf das Arbeitsfluid übertragen und die Kühlflüssigkeit gekühlt wird.

2. Gebläse nach Anspruch 1, **dadurch gekennzeichnet, dass**
a) der erste Verdichterdämmraum (98) ein Radialraum (78) ist, welcher unmittelbar an das Spiralgehäuse (48) angrenzt;
und/oder
b) der erste Antriebsdämmraum (102) ein Ringraum (80) ist, welcher unmittelbar an den Elektromotor (32) angrenzt.

3. Gebläse nach Anspruch 1 oder 2, **dadurch gekennzeichnet, dass** die erste Flüssigkeit (142) und/oder die zweite Flüssigkeit (144) Wasser, ein Silikon, ein Öl, ein Glykol oder ein Glykolgemisch ist.

4. Gebläse nach einem der Ansprüche 1 bis 3, **dadurch gekennzeichnet, dass** der Dämmkörper (116) und/oder die Dämmschicht (118) zumindest teilweise aus einem Schaumstoffmaterial gebildet ist.

5. Gebläse nach einem der Ansprüche 1 bis 4, **dadurch gekennzeichnet, dass** der Dämmkörper (116) und/oder die Dämmschicht (118) aus mehreren, in radialer Richtung aufeinander folgenden Schichtlagen (126) gebildet ist, die getrennt voneinander vorliegen oder ganz oder teilweise als Verbundschicht ausgebildet sind, in der die Schichtlagen (126) miteinander verbunden, insbesondere miteinander verklebt sind;
wobei
a) wenigstens eine Schichtlage (126.2, 126.4) aus einem Schaumstoffmaterial und wenigstens eine Schichtlage (126.1, 126.3) aus einer Bitumenschwerfolie gefertigt ist;
und/oder
b) in radialer Richtung aufeinanderfolgende Schichtlagen (126.1, 126.2, 126.3, 126.4) vorgesehen sind, die abwechselnd aus einem Schaumstoffmaterial und einer Bitumenschwerfolie gebildet sind;
und/oder
c) vier in radialer Richtung aufeinanderfolgende Schichtlagen (126.1, 126.2, 126.3, 126.4) vorgesehen sind;
und/oder
d) die radial innerste Schichtlage (126.1) aus eine Bitumenschwerfolie gebildet ist.

6. Gebläse nach einem der Ansprüche 1 bis 5, **dadurch gekennzeichnet, dass** das schallisolierende System (94) außerdem
a) in dem zweiten Verdichterdämmraum (100) einen Feststoff-Dämmblock (112) umfasst, der in axialer Richtung zwischen dem ersten Verdichterdämmraum (98) und dem Außengehäuse (18) angeordnet ist;
und/oder
b) in dem zweiten Antriebsdämmraum (104) einen Feststoff-Dämmblock (118) umfasst, der in axialer Richtung zwischen dem ersten Antriebsdämmraum (102) und dem Außengehäuse (18) angeordnet ist.

7. Gebläse nach einem der Ansprüche 1 bis 6, **dadurch gekennzeichnet, dass**
a) das Außengehäuse (18) außerdem einen Ableitsektor (26) definiert, in dem ein Ableitkanal (86) angeordnet ist, der mit einem Strömungsausgang (52) des Spiralgehäuses (48) verbunden ist und zu der Auslassöffnung (30) der Verdichtereinheit (12) führt;
b) das schallisolierende Dämmsystem (94) in dem Ableitsektor (26) einen Ableitdämmraum (106) definiert, welcher den Ableitkanal (86) zumindest teilweise umgibt und in dem ein Feststoff-Schalldämpfervolumen vorliegt.

8. Gebläse nach Anspruch 7, **dadurch gekennzeichnet, dass** ein Strömungsweg (134) für das Arbeitsfluid aus dem Spiralgehäuse (48) heraus zur Auslassöffnung (52) der Verdichtereinheit (12) ausgebildet ist, wobei dieser Strömungsweg (134) eine oder mehrere Umlenkstellen (136) umfasst, in denen die Strömungsrichtung der Abluft insbesondere um einen Winkel von 90° umgelenkt wird.

9. Gebläse nach Anspruch 8, **dadurch gekennzeichnet, dass** es in Strömungsrichtung wenigstens vor einer Umlenkstelle (136) einen Druck-Kompensationsabschnitt (138) mit einer Engstelle gibt, der in Strömungsrichtung einen verjüngten oder sich verjüngenden Querschnitt und dann wieder einen sich erweiternden Querschnitt definiert.

10. Gebläse nach Anspruch 9, **dadurch gekennzeichnet, dass** der Querschnitt des Strömungsweges (134) in einem Druck-Kompensationsabschnitt (138) von der Engstelle zum wieder erweiterten Querschnitt sich um einen Faktor zwischen 1,1 und 1,3, vorzugsweise um einen Faktor von etwa 1,24 oder etwa 1,3, erweitert.

11. Gebläse nach einem der Ansprüche 1 bis 10, **dadurch gekennzeichnet, dass** das schallisolierende Dämmsystem (94) eine Lagerstruktur (130) umfasst, mittels welcher der Elektromotor (32) und/oder das Spiralgehäuse (48) schwimmend gegenüber dem Außengehäuse (18) gelagert ist.

12. Gebläse nach Anspruch 11, **dadurch gekennzeichnet, dass** die Lagerstruktur (130) den Feststoff-Dämmkörper (116) und/oder die Feststoff-Dämmschicht (124) und/oder einen oder beide der Feststoff-Dämmblöcke (112, 118) gemäß Anspruch 6 umfasst.

13. Gebläse nach einem der Ansprüche 1 bis 12, welches eine Kühlmittel-Versorgungseinheit (14) mit einem Kühlmittelbehälter (158) für die in dem Kühlkreislauf (152) geführte Kühlflüssigkeit und eine Pumpe (160) umfasst.

14. Gebläse nach einem der Ansprüche 1 bis 13, **dadurch gekennzeichnet, dass** der erste Verdichterdämmraum (98) und der erste Antriebsdämmraum (102) durch eine Zwischenwand (76) voneinander getrennt sind, die als Wärmeleiter und hierfür insbesondere aus Aluminium ausgebildet ist.

15. Gebläse nach einem der Ansprüche 1 bis 14, **dadurch gekennzeichnet, dass** die Einlassöffnung (28) mit einer Ansaugleitung (68) verbunden ist und eine Sicherheitseinrichtung (182) bereitgestellt ist, durch welche ein teilweises oder vollständiges Blockieren der Ansaugleitung (68) erfassbar ist und welche bei einem Blockieren der Ansaugleitung (68) ein Hilfsgas zur Verfügung stellt, welches anstelle des Arbeitsfluids zur Einlassöffnung der Verdichtereinheit (12) strömt.

16. Gebläse nach Anspruch 15, **dadurch gekennzeichnet, dass** die Sicherheitseinrichtung (182) ein Ventil (190) in einer Hilfsgasleitung (188) umfasst, welche in die Ansaugleitung (68) mündet, wobei die Sicherheitseinrichtung (182) derart eingerichtet ist, dass das Ventil (188) in einer Grundkonfiguration schließt und abgängig von einem oder mehreren Parametern, insbesondere abhängig vom Druck, der Temperatur und/oder dem Volumenstrom, in der Ansaugleitung (68) öffnet.

## Claims

1. Medical, in particular dental-medical, fan for extracting or compressing a gaseous working fluid, comprising:
a) a compressor unit (12) with an outer housing (18), which comprises an inlet opening (28) for the working fluid and an outlet opening (30) for the working fluid, which are fluidically connected to one another, and which defines a compressor sector (22) and a drive sector (24);
b) a fan unit (42, 48) with a radial impeller (42) in a spiral housing (48), which is kept in the compressor sector (22) and by which working fluid can be fed from the inlet opening (28) to the outlet opening (30), wherein the axis of rotation of the radial impeller (42) defines the longitudinal axis (40) and an axial direction of the compressor unit (12);
c) an electric motor (32), in particular an electronically commutated electric motor, which is kept in the drive sector (26) and by which the radial impeller (42) can be driven;
d) a soundproofing absorption system (94);
wherein
e) the soundproofing absorption system (94) in the compressor sector (22) defines a first and a second compressor absorption space (98, 100), which at least partially surround the spiral housing (48) in the radial direction, wherein, in the radial direction, in the first compressor absorption space (98) there is a first liquid volume (140) of a first liquid (142) and in the second compressor absorption space (100) there is a solid absorber (116);
f) the soundproofing absorption system (94) in the drive sector (24) defines a first and a second drive absorption space (102, 104), which at least partially surround the electric motor (32) in the radial direction, wherein, in the radial direction, in the first drive absorption space (102) there is a second liquid volume (146) of a second liquid (146) and in the second drive absorption space (104) there is a solid absorbing layer (124),
wherein the fan (10) comprises a cooling system (96), for which
g) a first drive absorption space (102) is formed as a through-flow space and a first compressor absorption space (98) is formed as a closed space; or
the first drive absorption space (102) is formed as a closed space and the first compressor absorption space (98) is formed as a through-flow space; or
the first drive absorption space (102) and the first compressor absorption space (98) are formed as a through-flow space;
h) the through-flow space is connected to an inflow connection (148) and an outflow connection (150), which for their part are connected to an inflow line (154) and an outflow line (156) to a cooling circuit (152), in which the liquid (142; 146) flowing through the through-flow space provides a cooling liquid,
**characterized in that** the inlet opening (28) is connected to an intake line (68) and **in that** the cooling system (96) comprises a heat exchanger (162) which is connected to the intake line (68) and the outflow line (156) of the cooling circuit (152) in such a way that the heat exchanger (162) is flowed through by the working fluid and the cooling liquid in such a way that heat is transferred from the cooling liquid to the working fluid and the cooling liquid is cooled;

2. Fan according to claim 1, **characterized in that**
a) the first compressor absorption space (98) is a radial space (78) that directly adjoins the spiral housing (48); and/or
b) the first drive absorption space (102) is an annular space (80) that directly adjoins the electric motor (32).

3. Fan according to claim 1 or 2, **characterized in that** the first liquid (142) and/or the second liquid (144) is water, a silicone, an oil, a glycol or a glycol mixture.

4. Fan according to any one of claims 1 to 3, **characterized in that** the absorber (116) and/or the absorbing layer (118) is at least partially formed from a foam material.

5. Fan according to any one of claims 1 to 4, **characterized in that** the absorber (116) and/or the absorbing layer (118) is formed from a number of layers (126) following one another in the radial direction that are separate from one another or are formed entirely or partially as a composite layer in which the layers (126) are bonded to one another;
wherein
a) at least one layer (126.2), 126.4) is produced from a foam material and at least one layer (126.1, 126.3) is produced from a bitumen heavy foil; and/or
b) layers (126.1, 126.2, 126.3, 126.4) following one another in the radial direction, which are alternately formed from a foam material and a bitumen heavy foil, are provided; and/or
c) four layers (126.1, 126.2, 126.3, 126.4) following one another in the radial direction are provided; and/or
d) the radially innermost layer (126.1) is formed from a bitumen heavy foil.

6. Fan according to any one of claims 1 to 5, characterized int that the soundproofing system (94) also
a) comprises in the second compressor absorption space (100) a solid absorbing block (112) which, in the axial direction, is arranged between the first compressor absorption space (98) and the outer housing (18); and/or
b) comprises in the second drive absorption space (104) a solid absorbing block (118) which, in the axial direction, is arranged between the first drive absorption space (102) and the outer housing (18).

7. Fan according to any one of claims 1 to 6, **characterized in that**
a) the outer housing (18) also defines a discharge sector (26), arranged in which is a discharge channel (86), which is connected to a flow output (52) of the spiral housing (48) and leads to the outlet opening (30) of the compressor unit (12);
b) the soundproofing absorption system (94) in the discharge sector (26) defines a discharge absorption space (106), which at least partially surrounds the discharge channel (86) and in which there a solid sound damper volume.

8. Fan according to claim 7, **characterized in that** a flow path (134) for the working fluid is formed from the spiral housing (48) to the outlet opening (52) of the compressor unit (12), wherein this flow path (134) comprises one or more deflecting points (136) at which the direction of flow of exhaust air is deflected, in particular by an angle of 90°.

9. Fan according to claim 8, **characterized in that** there is at least before a deflecting point (136) in the direction of flow a pressure compensating portion (138) with a constriction, which defines in the direction of flow a narrowed or narrowing cross section and then again a widening cross section.

10. Fan according to claim 9, **characterized in that** the cross section of the flow path (134) in a pressure compensating portion (138) widens from the constriction to the re-widened cross section by a factor of between 1.1 and 1.3.

11. Fan according to any one of claims 1 to 10, **characterized in that** the soundproofing absorption system (94) comprises a bearing structure (130) by means of which the electric motor (32) and/or the spiral housing (48) is mounted in a floating manner with respect to the outer housing (18).

12. Fan according to claim 11, **characterized in that** the bearing structure (130) comprises the solid absorber (116) and/or the solid absorbing layer (124) and/or one or both of the solid absorbing blocks (112, 118) according to claim 6.

13. Fan according to any one of claims 1 to 12, which comprises a coolant supply unit (14) with a coolant container (158) for the cooling liquid carried in the cooling circuit (152) and a pump (160).

14. Fan according to any one of claims 1 to 13, **characterized in that** the first compressor absorption space (98) and the first drive absorption space (102) are separated from one another by an intermediate wall (76), which is formed as a heat conductor, and for this in particular from aluminum.

15. Fan according to any one of claims 1 to 14, **characterized in that** the inlet opening (28) is connected to an intake line (68) and a safety device (182) is provided, by which partial or complete blocking of the intake line (68) can be detected and, in the event of blocking of the intake line (68), provides an auxiliary gas, which flows to the inlet opening of the compressor unit (12) instead of the working fluid.

16. Fan according to claim 15, **characterized in that** the safety device (182) comprises a valve (190) in an auxiliary gas line (188), which opens out into the intake line (68), wherein the safety device (182) is designed in such a way that the valve (188) closes in a basic configuration and opens dependent on one or more parameters, in particular dependent on the pressure, the temperature and/or the volumetric flow, in the intake line (68).

## Revendications

1. Ventilateur médical, notamment de médecine dentaire, destiné à aspirer ou à comprimer un fluide de travail gazeux, en particulier de l'air, comprenant :
a) une unité de compresseur (12) avec un boîtier extérieur (18) qui comprend une ouverture d'entrée (28) pour le fluide de travail et une ouverture de sortie (30) pour le fluide de travail qui sont reliées entre elles en termes d'écoulement, et qui définit un secteur de compresseur (22) et un secteur d'entraînement (24) ;
b) une unité de ventilateur (42, 48) avec une roue radiale (42) dans un boîtier en spirale (48), qui est logée dans le secteur de compresseur (22) et par laquelle le fluide de travail peut être transporté de l'ouverture d'entrée (28) vers l'ouverture de sortie (30), l'axe de rotation de la roue radiale (42) définissant l'axe longitudinal (40) et une direction axiale de l'unité de compresseur (12) ;
c) un moteur électrique (32), notamment un moteur électrique à commutation électronique, qui est logé dans le secteur d'entraînement (26) et par lequel la roue radiale (42) peut être entraînée ;
d) un système d'isolation acoustique (94) ;
dans lequel
e) le système d'isolation acoustique (94) définit dans le secteur de compresseur (22) une première et une deuxième chambre d'isolation de compresseur (98, 100) qui entourent au moins partiellement le boîtier en spirale (48) dans la direction radiale, dans lequel, dans la direction radiale, un premier volume de liquide (140) constitué d'un premier liquide (142) est présent dans la première chambre d'isolation de compresseur (98) et un corps isolant à matière solide (116) est présent dans la deuxième chambre d'isolation de compresseur (100) ;
f) le système d'isolation acoustique (94) définit, dans le secteur d'entraînement (24), une première et une deuxième chambre d'isolation d'entraînement (102, 104) qui entourent au moins partiellement le moteur électrique (32) dans la direction radiale, dans lequel, dans la direction radiale, un deuxième volume de liquide (146) constitué d'un deuxième liquide (146) est présent dans la première chambre d'isolation d'entraînement (102) et une couche isolante à matière solide (124) est présente dans la deuxième chambre d'isolation d'entraînement (104),
dans lequel
le ventilateur (10) comprend un système de refroidissement (96) pour lequel
g) la première chambre d'isolation d'entraînement (102) est conçue comme une chambre de passage et la première chambre d'isolation de compresseur (98) comme une chambre fermée ; ou
la première chambre d'isolation d'entraînement (102) est conçue comme une chambre fermée et la première chambre d'isolation de compresseur (98) comme une chambre de passage ; ou
la première chambre d'isolation d'entraînement (102) et la première chambre d'isolation de compresseur (98) sont conçues comme des chambres de passage ;
h) la chambre de passage est reliée à un raccord d'arrivée (148) et à un raccord d'évacuation (150) qui sont eux-mêmes reliés à une conduite d'arrivée (154) et à une conduite d'évacuation (156) pour former un circuit de refroidissement (152) dans lequel le liquide s'écoulant à travers la chambre de passage (142 ; 146) constitue un liquide de refroidissement,
**caractérisé en ce que** l'ouverture d'entrée (28) est reliée à une conduite d'aspiration (68) et **en ce que** le système de refroidissement (95) comprend un échangeur de chaleur (162) qui est relié à la conduite d'aspiration (68) et à la conduite d'évacuation (156) du circuit de refroidissement (152) de telle sorte que l'échangeur de chaleur (162) est traversé par le fluide de travail et le liquide de refroidissement de telle sorte que de la chaleur est transférée du liquide de refroidissement au fluide de travail et que le liquide de refroidissement est refroidi.

2. Ventilateur selon la revendication 1, **caractérisé en ce que**
a) la première chambre d'isolation de compresseur (98) est une chambre radiale (78) qui est directement adjacente au boîtier en spirale (48) ; et/ou
b) la première chambre d'isolation d'entraînement (102) est une chambre annulaire (80) qui est directement adjacente au moteur électrique (32).

3. Ventilateur selon la revendication 1 ou 2, **caractérisé en ce que** le premier liquide (142) et/ou le deuxième liquide (144) sont de l'eau, un silicone, une huile, un glycol ou un mélange de glycols.

4. Ventilateur selon l'une quelconque des revendications 1 à 3, **caractérisé en ce que** le corps isolant (116) et/ou la couche isolante (118) sont constitués au moins en partie d'un matériau alvéolaire.

5. Ventilateur selon l'une quelconque des revendications 1 à 4, **caractérisé en ce que** le corps isolant (116) et/ou la couche isolante (118) sont formés de plusieurs couches individuelles (126) successives dans la direction radiale, qui sont séparées les unes des autres ou qui sont réalisées en tout ou en partie sous forme de couche composite dans laquelle les couches individuelles (126) sont reliées entre elles, notamment collées entre elles ;
dans lequel
a) au moins une couche individuelle (126.2, 126.4) est constituée d'un matériau alvéolaire, et au moins une couche individuelle (126.1, 126.3) est constituée d'une feuille lourde bitumineuse ;
et/ou
b) des couches individuelles successives sont prévues dans la direction radiale (126.1, 126.2, 126.3, 126.4) qui sont formées en alternance d'un matériau alvéolaire et d'une feuille lourde bitumineuse ;
et/ou
c) quatre couches individuelles successives sont prévues dans la direction radiale (126.1, 126.2, 126.3, 126.4) ;
et/ou
d) la couche individuelle la plus intérieure radialement (126.1) est formée d'une feuille lourde bitumineuse.

6. Ventilateur selon l'une quelconque des revendications 1 à 5, **caractérisé en ce que** le système d'isolation acoustique (94) comprend en outre
a) un bloc isolant à matière solide (112) dans la deuxième chambre d'isolation de compresseur (100), ledit bloc étant disposé dans la direction axiale entre la première chambre d'isolation de compresseur (98) et le boîtier extérieur (18) ;
et/ou
b) un bloc isolant à matière solide (118) dans la deuxième chambre d'isolation d'entraînement (104), ledit bloc étant disposé dans la direction axiale entre la première chambre d'isolation d'entraînement (102) et le boîtier extérieur (18).

7. Ventilateur selon l'une quelconque des revendications 1 à 6, **caractérisé en ce que**
a) le boîtier extérieur (18) définit en outre un secteur de dérivation (26) dans lequel est disposé un canal de dérivation (86) qui est relié à une sortie d'écoulement (52) du boîtier en spirale (48) et mène à l'ouverture de sortie (30) de l'unité de compresseur (12) ;
b) le système d'isolation acoustique (94) définit dans le secteur de dérivation (26) une chambre d'isolation de dérivation (106) qui entoure au moins partiellement le canal de dérivation (86) et dans lequel se trouve un volume de silencieux à matière solide.

8. Ventilateur selon la revendication 7, **caractérisé en ce qu'**un chemin d'écoulement (134) pour le fluide de travail est formé à partir du boîtier en spirale (48) vers l'ouverture de sortie (52) de l'unité de compresseur (12), dans lequel ce chemin d'écoulement (134) comprend un ou plusieurs points de déviation (136) au niveau desquels la direction d'écoulement de l'air évacué est déviée en particulier d'un angle de 90°.

9. Ventilateur selon la revendication 8, **caractérisé en ce qu'**il existe, dans le sens d'écoulement, au moins avant un point de déviation (136), une section de compensation de pression (138) avec un rétrécissement qui définit dans le sens d'écoulement une section transversale rétrécie ou se rétrécissant, puis à nouveau une section transversale s'élargissant.

10. Ventilateur selon la revendication 9, **caractérisé en ce que** la section transversale du chemin d'écoulement (134) dans une section de compensation de pression (138) s'élargit, depuis le rétrécissement à la section transversale de nouveau élargie, d'un facteur compris entre 1,1 et 1,3, de préférence d'un facteur d'environ 1,24 ou d'environ 1,3.

11. Ventilateur selon l'une quelconque des revendications 1 à 10, **caractérisé en ce que** le système d'isolation acoustique (94) comprend une structure de support (130) au moyen de laquelle le moteur électrique (32) et/ou le boîtier en spirale (48) sont montés flottants par rapport au boîtier extérieur (18).

12. Ventilateur selon la revendication 11, **caractérisé en ce que** la structure de support (130) comprend le corps isolant à matière solide (116) et/ou la couche isolante à matière solide (124) et/ou un ou les deux blocs isolants à matière solide (112, 118) selon la revendication 6.

13. Ventilateur selon l'une quelconque des revendications 1 à 12, comprenant une unité (14) d'alimentation en réfrigérant avec un réservoir de réfrigérant (158) pour le liquide de refroidissement circulant dans le circuit de refroidissement (152), et une pompe (160).

14. Ventilateur selon l'une quelconque des revendications 1 à 13, **caractérisé en ce que** la première chambre d'isolation de compresseur (98) et la première chambre d'isolation d'entraînement (102) sont séparées l'une de l'autre par une paroi intermédiaire (76) qui est conçue comme un conducteur thermique et notamment réalisée à cet effet en aluminium.

15. Ventilateur selon l'une quelconque des revendications 1 à 14, **caractérisé en ce que** l'ouverture d'entrée (28) est reliée à une conduite d'aspiration (68) et **en ce qu'**un dispositif de sécurité (182) est prévu permettant de détecter un blocage partiel ou complet de la conduite d'aspiration (68) et fournissant, en cas de blocage de la conduite d'aspiration (68), un gaz auxiliaire qui s'écoule à la place du fluide de travail vers l'ouverture d'entrée de l'unité de compresseur (12).

16. Ventilateur selon la revendication 15, **caractérisé en ce que** le dispositif de sécurité (182) comprend une soupape (190) dans une conduite de gaz auxiliaire (188) qui débouche dans la conduite d'aspiration (68), dans lequel le dispositif de sécurité (182) est conçu de telle sorte que la soupape (188) se ferme dans une configuration de base et s'ouvre en fonction d'un ou plusieurs paramètres, en particulier en fonction de la pression, de la température et/ou du débit volumique dans la conduite d'aspiration (68).
